# EUROPÄISCHE PATENTSCHRIFT

(11) **EP 2 825 014 B1**
(45) Veröffentlichungstag und Bekanntmachung des Hinweises auf die Patenterteilung: **26.04.2017**
(21) Anmeldenummer: 13703581.2
(22) Anmeldetag: 08.02.2013
(51) Int. Cl.: A01B 73/02

(54) **FALTBARES LANDWIRTSCHAFTLICHES ARBEITSGERÄT**
FOLDABLE AGRICULTURAL MACHINE
MACHINE AGRICOLE REPLIABLE

(30) Priorität: 14.03.2012 DE 102012102139
(43) Veröffentlichungstag der Anmeldung: 21.01.2015
(73) Patentinhaber: Amazonen-Werke H. Dreyer GmbH & Co. KG, 49205 Hasbergen (DE)
(72) Erfinder: FRIEL, Holger, 19288 Glaisin (DE); SCHLEGEL, Christoph, 18057 Rostock (DE)
(86) Internationale Anmeldenummer: PCT/EP2013/052563
(87) Internationale Veröffentlichungsnummer: WO 2013/135444

(56) Entgegenhaltungen:
- EP-A2- 1 179 289
- DE-A1- 3 726 506
- DE-U1- 9 111 676
- FR-A1- 2 558 332

## Beschreibung

Die Erfindung betrifft ein faltbares landwirtschaftliches Arbeitsgerät gemäß des Oberbegriffes des Patentanspruches 1.

Ein derartiges faltbares landwirtschaftliches Arbeitsgerät ist in der EP 1 179 289 B1 beschrieben. Dieses Arbeitsgerät ist als Bodenbearbeitungsgerät ausgebildet. Das Bodenbearbeitungsgerät weist einen Mittelrahmen und jeweils aus zwei Sektionen bestehende Flügelabschnitte auf. Der Mittelrahmen und die Sektionen der Flügelabschnitte sind jeweils mittels Gelenke miteinander verbunden. Die Gelenkachsen verlaufen in Fahrtrichtung. Die einzelnen Sektionen sind gegenüber dem Mittelrahmen und zueinander in Transportstellung einklappbar und in Arbeitsteilung ausklappbar. Nachteilig ist bei dieser Art der Aufstellung der Flügelabschnitte in jeweils zwei Sektionen, dass die mögliche Arbeitsbreite aufgrund der für den Transport auf öffentlichen Wegen und Straßen gesetzlich vorgeschriebenen maximalen Maße beschränkt ist.

Der Erfindung liegt die Aufgabe zu Grunde, eine verbesserte Einfaltmöglichkeit unter Beachtung der für den Transport auf öffentlichen Wegen und Straßen gesetzlich vorgeschriebenen maximalen Maße für Arbeitsgeräte großer Arbeitsbreite, die gegenüber den bekannten Arbeitsbreiten vergrößert sind, vorzuschlagen.

Diese Aufgabe wird durch ein Bodenbearbeitungsgerät gemäß Anspruch 1 gelöst.

Die Aufgabe der Erfindung wird insbesondere dadurch gelöst, dass jeder Flügelabschnitt aus drei Sektionen besteht, dass die Gelenkachsen zwischen dem Mittelrahmen und der ersten Sektion und die Gelenkachsen zwischen der ersten und zweiten Sektion in Fahrtrichtung verlaufen, dass die jeweilige Gelenkachse zwischen der zweiten und dritten Sektion in Feldarbeitsposition der Sektionen zumindest annähernd vertikal verläuft. Infolge dieser Maßnahmen kann zumindest eine weitere Sektion an den bisherigen Sektion der Flügelabschnitte zusätzlich angeordnet und in einfacher Weise im Transportstellung eingeklappt und in Arbeitsteilung ausgeklappt werden. Somit lässt sich trotz einer erheblichen Vergrößerung der Arbeitsbreite des Arbeitsgerätes das Gerät für den Transport innerhalb der gesetzlich vorgeschriebenen Transportmaße zusammenfalten.

Um die geforderte Bewegungsmöglichkeit der äußerten Sektion gegenüber den übrigen Sektionen zu ermöglichen, ist vorgesehen, dass das jeweilige Gelenk zwischen der zweiten und dritten Sektion des jeweiligen Flügelabschnittes als Kreuzgelenk ausgebildet ist.

Das Zusammenfalten des erheblich verbreiterten Gerät lässt sich in vorteilhafter Weise dadurch erreichen, dass zum Überführen der einzelnen Sektion der jeweiligen Flügelabschnitte von der Feldarbeitsposition in die Transportposition
- in einem ersten Schritt die jeweilige dritte Sektion um in die Vertikalachse um 180° an die Vorder- oder Rückseite der jeweiligen zweiten Sektion herangeschwenkt wird,
- in einem zweiten Schritt die jeweilige zweite Sektion mit der jeweiligen herangeschwenkten dritten Sektion gegenüber der jeweiligen ersten Sektion um die zwischen der jeweiligen ersten und zweiten Sektion liegenden Gelenkachse um 180° auf die jeweilige erste Sektion geschwenkt werden,
- in einem dritten Schritt die jeweiligen zusammengeschwenkten Sektion der jeweiligen Flügelabschnitte um 90° nach oben in den Bereich des Mittelrahmens, vorzugsweise oberhalb des Mittelrahmens geschwenkt werden.

So ergibt sich ein einfach durchzuführendes einfalten der einzelnen Sektionen zueinander.

Ein gutes Anheben der äußersten Sektion sowie anpassen an die Bodenkontur wird dadurch gewährleistet, dass die jeweilige dritte Sektion gegenüber der jeweiligen zweiten Sektion um zumindest 5° nach oben schwenkbar ist.

Weitere Einzelheiten der Erfindung sind der Beispielsbeschreibung zu entnehmen. Die Zeichnungen zeigen
- Fig.1: das als Bodenbearbeitungsgerät großer Arbeitsbreite ausgebildete gezogene landwirtschaftliche Arbeitsgerät in Arbeitsstellung und in perspektivischer Darstellung,
- Fig.2: das Bodenbearbeitungsgerät in perspektivischer Darstellung, wobei die jeweils äußerste Sektion zur Vorbereitung der Überführung in die Transportstellung leicht nach oben angewinkelt ist,
- Fig.3: das Bodenbearbeitungsgerät in perspektivischer Darstellung, wobei die jeweils äußerste Sektion in der ersten Einklappphase dargestellt ist,
- Fig.4: das Bodenbearbeitungsgerät in perspektivischer Darstellung, wobei die jeweils äußerste Sektion in einer weiteren fortgeschrittenen Einklappphase dargestellt ist,
- Fig.5: das Bodenbearbeitungsgerät in perspektivischer Darstellung, wobei die jeweils äußerste Sektion an die benachbarte Sektion herangeschwenkt dargestellt ist,
- Fig.6: das Bodenbearbeitungsgerät in perspektivischer Darstellung, wobei die jeweils äußerste und benachbarte Sektion in einer Zwischeneinschwenkposition dargestellt sind,
- Fig.7: das Bodenbearbeitungsgerät in perspektivischer Darstellung, wobei die jeweils äußerste und benachbarte Sektion in der um 180°verschwenkten Position dargestellt sind,
- Fig.8: das Bodenbearbeitungsgerät in perspektivischer Darstellung, wobei die drei Sektionen aus der in Fig.7 dargestellten Position um 45° weiter in Transportstellung geschwenkt sind und
- Fig.9: das Bodenbearbeitungsgerät in Transportstellung und in perspektivischer Darstellung.

Das gezogene landwirtschaftliche Arbeitsgerät großer Arbeitsbreite ist als Bodenbearbeitungsgerät ausgebildet. Das Bodenbearbeitungsgerät weist eine Arbeitsbreite von 17 m auf. Das Bodenbearbeitungsgerät weist einen Tragrahmen 1 auf. An dem Tragrahmen 1 ist auf dessen Vorderseite eine Zugdeichsel 2 zur Ankoppelung an eine Zugvorrichtung eines Ackerschleppers angeordnet. Auf der Rückseite des Tragrahmens 1 ist ein höhenverstellbares Fahrwerk 3 mit den Laufrädern 4 angeordnet.

An dem Tragrahmen 1 des Bodenbearbeitungsgerätes ist der Mittelrahmen 5 befestigt. An dem als Mittelrahmen 5 ausgebildeten Tragrahmen 1 schließen sich beidseitig jeweils Flügelabschnitte 6, 6', die jeweils drei Rahmensektionen 7, 7', 8, 8', 9, 9'aufweisen, an.

Die jeweils erste Sektion 7, 7' ist mittels Gelenken 10, deren Gelenkachsen 11 in Fahrtrichtung 12 verlaufen, verschwenkbar an dem Mittelrahmen 5 angeordnet. Zwischen dem Mittelrahmen 5 und der jeweils ersten Sektion 7, 7' sind als Hydraulikzylinder 13 ausgebildete Stellelemente angeordnet, um die jeweils erste Sektion 7, 7' mit den übrigen Sektionen 8, 8', 9, 9' gegenüber dem Mittelrahmen 5 verschwenken zu können.

Die jeweils zweite Sektion 8, 8'ist ebenfalls mittels Gelenken 14, deren Gelenkachsen 15 ebenfalls in Fahrtrichtung 12 verlaufen, an die benachbarte jeweilige erste Sektion 7, 7'verschwenkbar angeordnet. Zwischen der ersten 7, 7' und zweiten Sektion 8, 8' sind jeweils als Hydraulikzylinder 16 ausgebildete Stellelemente zum verschwenken der jeweils zweiten Sektion 8, 8' gegenüber der ersten Sektion 7, 7' angeordnet.

An den jeweiligen Außenbereich der zweiten Sektion 8, 8'ist jeweils eine dritte Sektion 9, 9' mittels eines Kreuzgelenkes 17 angeordnet. Dieses Kreuzgelenk befindet sich im hinteren Bereich der zweiten 8, 8' und dritten Sektion 9, 9' in deren einander benachbarten Bereichen. Die eine Gelenksachse 18 des Kreuzgelenkes 17 verläuft in Fahrtrichtung 12, während die andere Gelenksachse 19 des Kreuzgelenkes 17, in Arbeitsstellung des Gerätes aufrecht, zumindest annähernd vertikal verläuft. Zwischen der jeweiligen zweiten 8, 8' und dritten Sektion 9, 9' sind nicht dargestellte als Hydraulikzylinder ausgebildete Stellelemente angeordnet, um weiter in unten beschriebener Weise die dritte Sektion 9, 9' gegenüber der benachbarten jeweiligen zweiten Sektion 8, 8'verschwenken zu können. Das Gelenk 17, dessen Gelenksachse 18 zumindest annähernd in Fahrtrichtung verläuft, zwischen der zweiten 8, 8' und dritten Sektion 9, 9' ist so ausgestaltet, dass die jeweilige dritte Sektion 9, 9' gegenüber der jeweiligen zweiten Sektion 8, 8' um zumindest 5° nach oben schwenkbar ist.

Somit sind also die aus mehreren und über Gelenke 1, 14, 17 miteinander verbundenen Sektionen 7, 7', 8, 8', 9, 9' zueinander bewegbar und zueinander verschwenkbar. Durch die Bewegungsmöglichkeit der einzelnen Sektionen 7, 7', 8, 8', 9, 9' zueinander um in die in Fahrtrichtung 12 verlaufenden Gelenkachsen 11, 15, 18 können sich die einzelnen Sektionen 7, 7', 8, 8', 9, 9' der Flügelabschnitte 6, 6' und des Mittelrahmens 1, 5 an die Kontur der Bodenoberfläche zumindest annähernd anpassen.

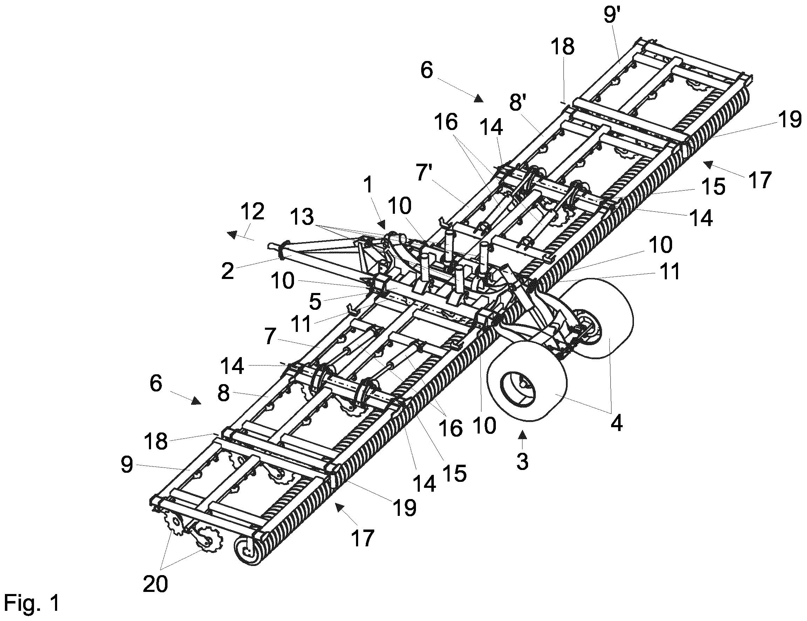

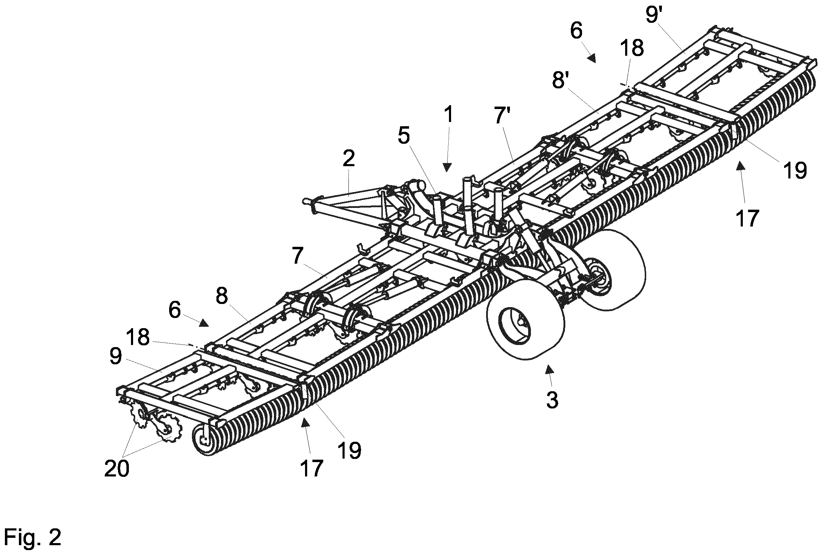

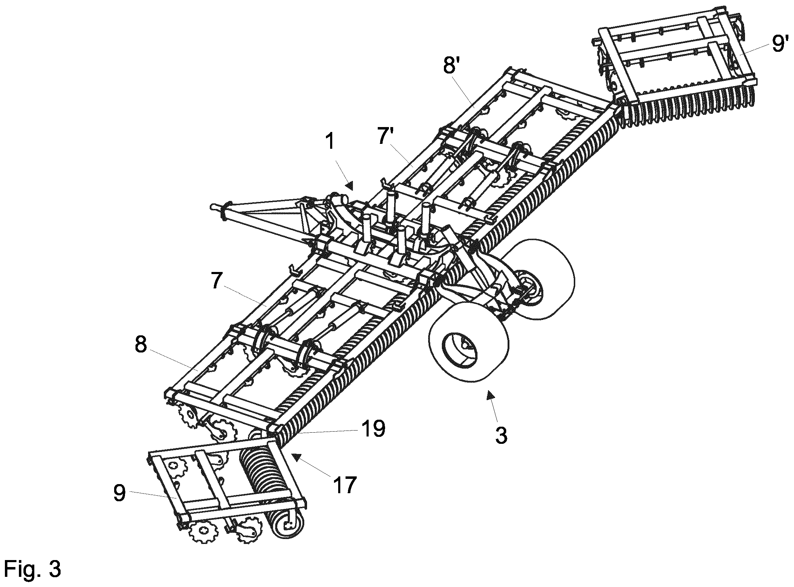

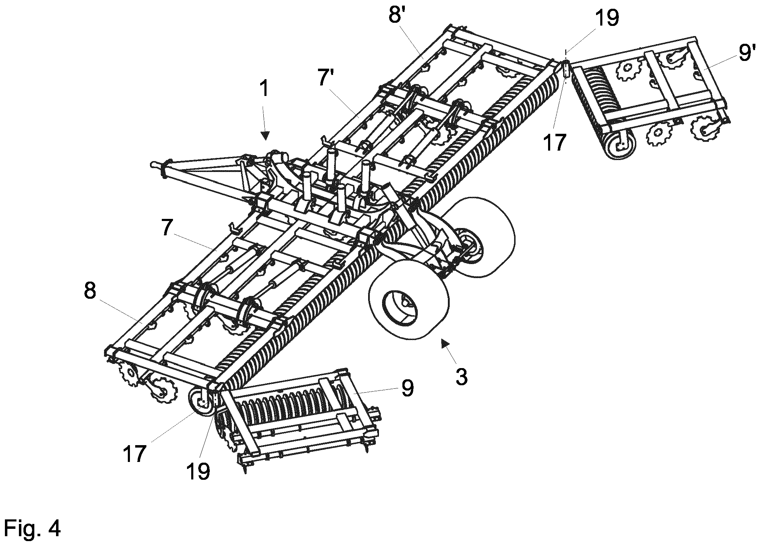

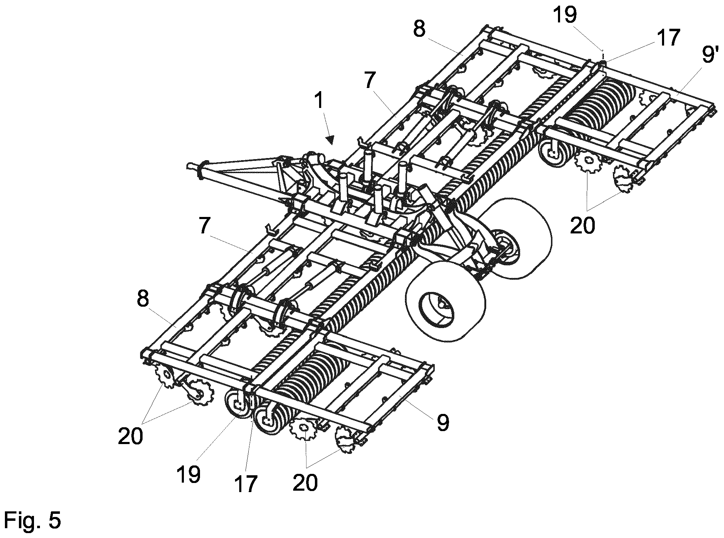

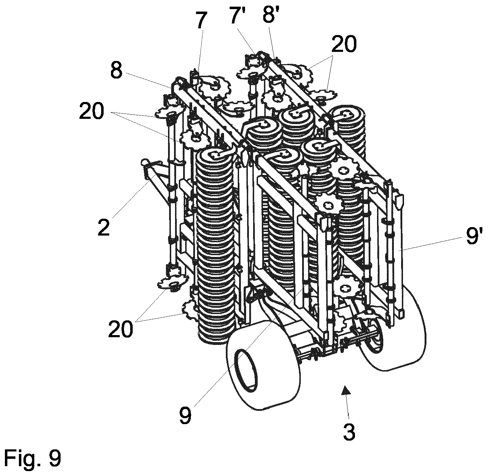

Das Überführen der einzelnen Sektionen 7, 7', 8, 8', 9, 9' der Flügelabschnitte 6, 6' des Bodenbearbeitungsgerätes aus der in Fig.1 dargestellten Arbeitsstellung in die Fig.9 dargestellten Transportstellung geschieht über die in den Fig.2 bis 8 dargestellten Zwischenschritte, wie nachfolgend erläutert wird:
Zunächst wird, wie in Fig.2 gezeigt, mittels der zwischen der äußersten 9, 9' und der zweiten Sektion 8, 8' angeordneten Hydraulikzylinder die äußerste Sektion um 5° um die in Fahrtrichtung 12 verlaufende Schwenkachs 18 des Kreuzgelenkes 17 nach oben verschwenkt, damit die äußerste Sektion 9, 9' etwas gegenüber dem Boden angehoben wird. Anschließend wird die jeweilige äußerste Sektion 9, 9' um die aufrechte Achse des Kreuzgelenkes 17 mittels des zwischen der äußersten Sektion 9, 9' und der zweiten Sektion 8, 8' angeordneten Hydraulikzylinder über die in Fig.3 und 4 dargestellten Zwischenpositionen in die in Fig.5 dargestellte Position verschwenkt, in welcher die äußerste Sektion 9, 9' rückseitig an die zweite Sektion 8, 8' herangeschwenkt ist. Somit ist die dritte Sektion 9, 9' gegenüber der zweiten Sektion 8, 8' um 180° an die Rückseite der jeweiligen zweiten Sektion in einem ersten Schritt herangeschwenkt.

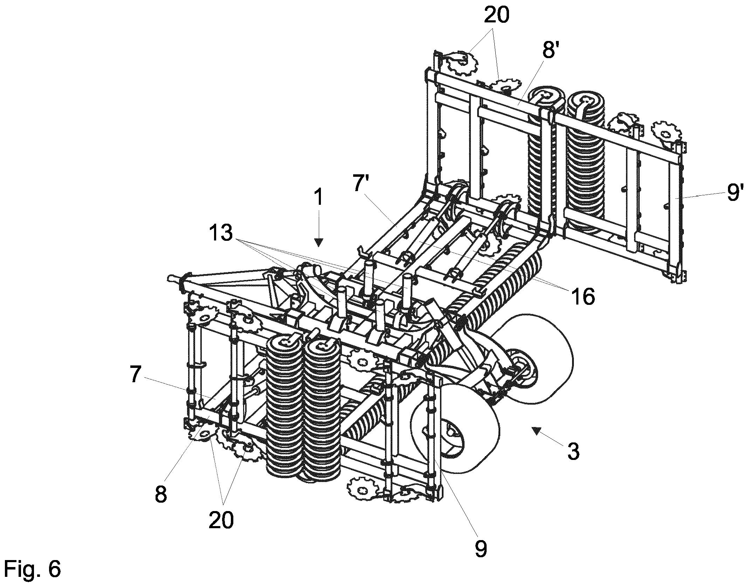

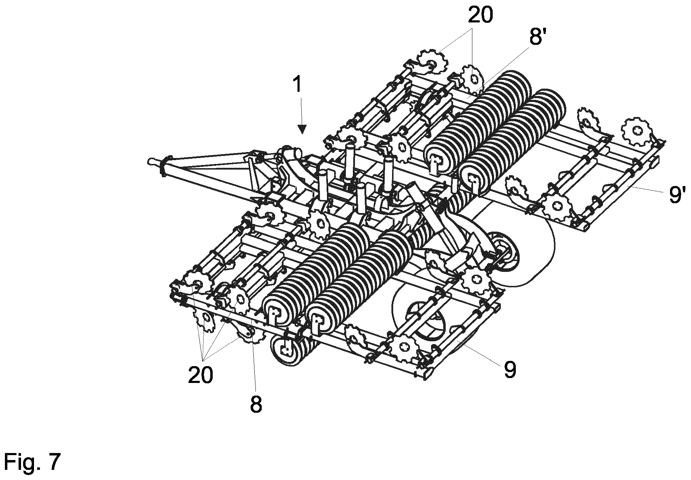

Anschließend werden einem zweiten Schritt die jeweilige zweite 8, 8' und dritte Sektion 9, 9' aus der in Fig.5 dargestellten Position über die Hydraulikzylinder 16 über die in Fig.6 dargestellte Zwischenposition um 180° in die ihn Fig.7 dargestellte Position verschwenkt, so dass die jeweilige zweite Sektion 8, 8' auf die erste Sektion 7, 7' geschwenkt ist. Das Verschwenken erfolgt um die in Fahrtrichtung 12 verlaufende und zwischen der zweiten 8, 8' und ersten Sektion 7, 7' liegenden Gelenksachse 15 der Gelenke 14.

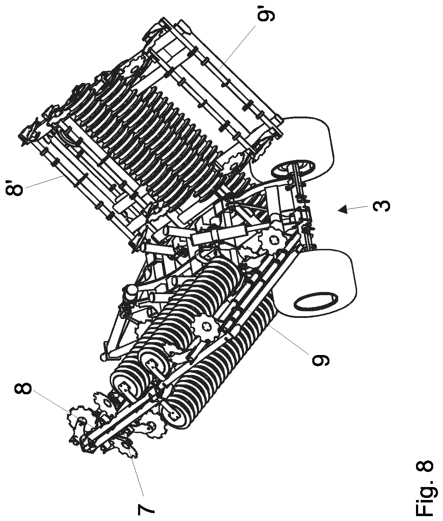

Anschließend werden in einem dritten Schritt die zusammengefalteten oder zusammen geschwenkten Sektionen 7, 7', 8, 8', 9, 9' gemäß Fig.8 um 90° nach oben in die ihn Fig.9 dargestellte Transportposition verschwenkt.

Somit wird für ein als Bodenbearbeitungsgerät ausgebildetes Arbeitsgerät mit einer Arbeitsbreite von 17 m eine sehr kompakt zusammengefaltete Ausgestaltung für den Transport des Gerätes auf öffentlichen Straßen und Wegen erreicht. Aufgrund der erfindungsgemäßen Einklapp- oder Einfalttechnik lassen sich somit die vorgeschriebenen maximalen Transportmaße zum Transporte des landwirtschaftlichen Gerätes auf öffentlichen Straßen und Wegen einhalten.

An den einzelnen Sektionen 7, 7', 8, 8', 9, 9' sind Bodenbearbeitungswerkzeuge 20 angeordnet.

## Patentansprüche

1. Bodenbearbeitungsgerät mit einem Mittelrahmen (1,5), Flügelabschnitten (6,6'), die schwenkbar an gegenüberliegenden Seiten des Mittelrahmens (1,5) angebracht und zwischen einer ausgefalteten Feldarbeitsposition, in der sie sich nach außen erstrecken, und einer eingefalteten Transportposition im Bereich des Mittelrahmens bewegbar sind, wobei die beiden Flügelabschnitte (6,6') mit ihren jeweiligen inneren Enden mittels Gelenken, deren Gelenkachsen in Fahrtrichtung verlaufen, an dem Mittelrahmen angelenkt sind, wobei die Flügelabschnitte aus mehreren über Gelenke bewegbar miteinander verbundenen Sektionen bestehen,
**dadurch gekennzeichnet, dass**
jeder Flügelabschnitt (6, 6') aus drei Sektionen (7, 7', 8, 8', 9, 9') besteht, wobei die Gelenkachsen (11) zwischen dem Mittelrahmen (1, 5) und der ersten Sektion (7, 7') und die Gelenkachsen (15) zwischen der ersten (7, 7') und zweiten Sektion (8, 8') jeweils in Fahrtrichtung (12) verlaufen; und
wobei das jeweilige Gelenk zwischen der zweiten (8, 8') und dritten Sektion (9, 9') des jeweiligen Flügelabschnittes (6, 6') als Kreuzgelenk (17) ausgebildet ist, wobei eine Gelenkachse (19) des jeweiligen Kreuzgelenks (17) in Feldarbeitsposition der Sektionen (7, 7', 8, 8', 9, 9') zumindest annähernd vertikal verläuft, während die andere Gelenkachse (18) des jeweiligen Kreuzgelenks (17) zumindest annähernd in Fahrtrichtung (12) verläuft.

2. Bodenbearbeitungsgerät nach Anspruch 1, **dadurch gekennzeichnet, dass** zum Überführen der einzelnen Sektion (7, 7', 8, 8', 9, 9') der jeweiligen Flügelabschnitte (6,6') von der Feldarbeitsposition in die Transportposition
- in einem ersten Schritt die jeweilige dritte Sektion (9, 9') um in die Vertikalachse (19) um 180° an die Vorder- oder Rückseite der jeweiligen zweiten Sektion (8, 8') herangeschwenkt wird,
- in einem zweiten Schritt die jeweilige zweite Sektion (8, 8') mit der jeweiligen herangeschwenkten dritten Sektion (9, 9') gegenüber der jeweiligen ersten Sektion (7, 7') um die zwischen der jeweiligen ersten (7, 7') und zweiten Sektion (8, 8') liegenden Gelenkachse (15) um 180° auf die jeweilige erste Sektion (7, 7') geschwenkt werden,
- in einem dritten Schritt die jeweiligen zusammengeschwenkten Sektionen (7, 7', 8, 8', 9, 9') der jeweiligen Flügelabschnitte (6, 6') um 90° nach oben in den Bereich des Mittelrahmens (1, 5), vorzugsweise oberhalb des Mittelrahmens (1, 5) geschwenkt werden.

3. Bodenbearbeitungsgerät nach Anspruch 1, **dadurch gekennzeichnet, dass** die jeweilige dritte Sektion (9, 9') gegenüber der jeweiligen zweiten Sektion (8, 8') um zumindest 5° nach oben schwenkbar ist.

## Claims

1. Soil cultivation implement with a central frame (1, 5) and wing portions (6, 6') which are attached pivotably to opposite sides of the central frame (1, 5) and are movable between an unfolded field working position in which they extend outwards and a folded-up transport position in the region of the central frame, wherein the two wing portions (6, 6') are coupled at their respective inner ends to the central frame by means of joints, the joint axes of which run in the direction of travel, wherein the wing portions consist of a plurality of sections which are movably connected to one another via joints, **characterized in that** each wing portion (6, 6') consists of three sections (7, 7', 8, 8', 9, 9'), wherein the joint axes (11) between the central frame (1, 5) and the first section (7, 7') and the joint axes (15) between the first section (7, 7') and the second section (8, 8') each run in the direction of travel (12); and wherein the respective joint between the second section (8, 8') and third section (9, 9') of the respective wing portion (6, 6') is designed as a universal joint (17), wherein a joint axis (19) of the respective universal joint (17) runs at least approximately vertically in the field working position of the sections (7, 7', 8, 8', 9, 9'), while the other joint axis (18) of the respective universal joint (17) runs at least approximately in the direction of travel (12).

2. Soil cultivation implement according to Claim 1, **characterized in that**, for the transfer of the individual section (7, 7', 8, 8', 9, 9') of the respective wing portions (6, 6') from the field working position into the transport position
- in a first step the respective third section (9, 9') is pivoted by 180° about the vertical axis (19) onto the front or rear side of the respective second section (8, 8'),
- in a second step the respective second section (8, 8') together with the respective third section (9, 9') which has been pivoted thereon are pivoted by 180° in relation to the respective first section (7, 7') about the joint axis (15) lying between the respective first section (7, 7') and second section (8, 8') onto the respective first section (7, 7'),
- in a third step the respective pivoted-together sections (7, 7', 8, 8', 9, 9') of the respective wing portions (6, 6') are pivoted by 90° upwards into the region of the central frame (1, 5), preferably above the central frame (1, 5).

3. Soil cultivation implement according to Claim 1, **characterized in that** the respective third section (9, 9') is pivotable upwards by at least 5° in relation to the respective second section (8, 8').

## Revendications

1. Appareil de travail du sol comprenant un cadre central (1, 5), des portions d'ailes (6, 6'), qui sont montées de manière à pouvoir pivoter au niveau de côtés opposés du cadre central (1, 5) et qui peuvent être déplacées entre une position de travail dépliée dans le champ, dans laquelle elles s'étendent vers l'extérieur, et une position de transport repliée dans la région du cadre central, les deux portions d'ailes (6, 6') étant articulées au cadre central avec leurs extrémités internes respectives au moyen d'articulations dont les axes d'articulation s'étendent dans la direction de conduite, les portions d'ailes se composant de plusieurs sections connectées les unes aux autres de manière déplaçable par le biais d'articulations,
**caractérisé en ce que**
chaque portion d'aile (6, 6') se compose de trois sections (7, 7', 8, 8', 9, 9'), les axes d'articulation (11) s'étendant entre le cadre central (1, 5) et la première section (7, 7'), et les axes d'articulation (15) s'étendant entre la première (7, 7') et la deuxième (8, 8') section, à chaque fois dans la direction de conduite (12) ; et
l'articulation respective entre la deuxième (8, 8') et la troisième (9, 9') section de la portion d'aile respective (6, 6') étant réalisée sous forme d'articulation en croix (17), un axe d'articulation (19) de l'articulation en croix respective (17) s'étendant au moins approximativement verticalement dans la position de travail dans le champ des sections (7, 7', 8, 8', 9, 9'), tandis que l'autre axe d'articulation (18) de l'articulation en croix respective (17) s'étend au moins approximativement dans la direction de conduite (12).

2. Appareil de travail du sol selon la revendication 1, **caractérisé en ce que** pour le transfert des sections individuelles (7, 7', 8, 8', 9, 9') des portions d'ailes respectives (6, 6') de la position de travail dans le champ dans la position de transport,
- dans une première étape, la troisième section respective (9, 9') est pivotée autour de l'axe vertical (19) de 180° contre le côté avant ou arrière de la deuxième section respective (8, 8'),
- dans une deuxième étape, la deuxième section respective (8, 8') sur laquelle a été pivotée la troisième section (9, 9') est pivotée par rapport à la première section respective (7, 7') autour de l'axe de pivotement (15) situé entre la première section respective (7, 7') et la deuxième section respective (8, 8') de 180° sur la première section respective (7, 7'),
- dans une troisième étape, les sections respectives pivotées les unes contre les autres (7, 7', 8, 8', 9, 9') des portions d'ailes respectives (6, 6') sont pivotées de 90° vers le haut dans la région du cadre central (1, 5), de préférence au-dessus du cadre central (1, 5).

3. Appareil de travail du sol selon la revendication 1, **caractérisé en ce que** la troisième section respective (9, 9') peut pivoter vers le haut par rapport à la deuxième section respective (8, 8') d'au moins 5°.
